# FASCICULE DE BREVET EUROPEEN

(11) **EP 1 745 421 B1**
(45) Date de publication et mention de la délivrance du brevet: **22.06.2011**
(21) Numéro de dépôt: 05747093.2
(22) Date de dépôt: 25.04.2005
(51) Int. Cl.: G06M 1/08, G01F 11/00

(54) **INDICATEUR POUR DISPOSITIF DE DISTRIBUTION DE PRODUIT FLUIDE OU PULVERULENT**
INDIKATOR FÜR EINE FLUID- ODER PULVERABGABEEINRICHTUNG
INDICATOR FOR A FLUID OR POWDER DISPENSER DEVICE

(30) Priorité: 29.04.2004 FR 0404594
(43) Date de publication de la demande: 24.01.2007
(73) Titulaire: Valois SAS, 27110 Le Neubourg (FR)
(72) Inventeur: STRADELLA, Giuseppe, I-16032 CAMOGLI (IT); STRADELLA, Fabio, I-16032 CAMOGLI (IT)
(74) Mandataire: CAPRI
(86) Numéro de dépôt international: PCT/FR2005/050277
(87) Numéro de publication internationale: WO 2005/111927

(56) Documents cités:
- WO-A-00/09187
- WO-A-01/31578
- WO-A-01/37909
- WO-A-03/080162

## Description

La présente invention concerne un indicateur et plus particulièrement un indicateur de doses pour dispositif de distribution de produit fluide, destiné à indiquer à l'utilisateur le nombre de doses distribuées ou restant à distribuer à partir du réservoir dudit dispositif.

L'utilisation de tels indicateurs, qui peuvent être par exemple des compteurs de doses, est bien connue dans l'état de la technique. Des problèmes se posent avec ces dispositifs, en particulier lorsqu'ils sont utilisés avec des dispositifs de distribution du type MIDI (Metered Dose Inhalers), c'est à-dire des dispositifs du type aérosol comportant un réservoir contenant le produit fluide ou pulvérulent et un gaz propulseur ainsi qu'une valve doseuse montée sur ledit réservoir. Un problème concerne notamment les dimensions du compteur. En effet, ces dispositifs MDI contiennent généralement un grand nombre de doses, par exemple deux cents, et l'objectif est de maintenir les dimensions du compteur ou de l'indicateur aussi petites que possible tout en garantissant une lecture précise pour l'utilisateur des doses distribuées ou restantes à distribuer. Ceci est notamment important lorsqu'il s'agit de produits pharmaceutiques, qui peuvent par exemple être utilisés par des personnes âgées ou par des enfants qui ont plus de difficulté à distinguer des chiffres si ceux-ci sont très petits. Des indicateurs ou compteurs du type circulaire, c'est-à-dire comportant des éléments rotatifs, ont déjà été proposés, et ces systèmes permettent de remplir l'exigence d'être compact. Toutefois, pour pouvoir assurer le comptage d'un grand nombre de doses, ils sont généralement complexe à réaliser, et il est généralement nécessaire d'utiliser des éléments d'indication qui, lors du fonctionnement, dépassent latéralement ou longitudinalement dudit compteur, ce qui rend impossible la fixation d'un tel compteur sur le fond du réservoir du dispositif. De même, lorsque ce compteur est disposé latéralement par rapport au réservoir, il est généralement nécessaire de prévoir un espace relativement important pour permettre à ces éléments de se loger pendant le fonctionnement du compteur.

Par ailleurs, la plupart des compteurs ou indicateurs existants comptent de manière régulière le nombre de doses distribuées ou restant à distribuer du début à la fin. Or, la fonction essentielle d'un compteur de doses est d'éviter à l'utilisateur de se retrouver avec un dispositif vide sans en être informé. Par conséquent, c'est surtout le comptage des dernières doses restant à distribuer qui est cruciale, pour informer l'utilisateur qu'il se rapproche de la fin d'utilisation de son dispositif.

Le document WO 00/09187 décrit un dispositif de l'art antérieur.

La présente invention a pour but de fournir un indicateur, notamment un compteur de doses, qui ne reproduit pas les inconvénients susmentionnés.

Plus particulièrement, la présente invention a pour but de fournir un tel indicateur qui est simple, compact et donc peu coûteux à fabriquer et à assembler, de fonctionnement sûre et fiable, et qui peut être disposé notamment sur le fond du réservoir ou latéralement par rapport à celui-ci dans n'importe quel type de dispositif de distribution de produit fluide ou pulvérulent.

La présente invention a également pour but de fournir un tel indicateur qui indique de manière progressive le nombre de doses distribuées ou restant à distribuer, en informant de manière particulièrement clair l'utilisateur lorsqu'il se rapproche de la fin d'utilisation de son dispositif.

La présente invention a donc pour objet un indicateur pour dispositif de distribution de produit fluide ou pulvérulent, comportant un système d'indication, ledit système d'indication comportant un couvercle pourvu d'une fenêtre de visualisation, un premier élément d'indication rotatif autour d'un axe, ledit premier élément d'indication comportant des premiers moyens d'indication, un second élément d'indication rotatif vautour d'un axe, ledit second élément d'indication comportant des seconds moyens d'indication, un élément d'interconnexion interconnecté entre lesdits premier et second éléments d'indication ledit élément d'interconnection étant déplaçable perpendiculairement à l'axe de rotation desdits premier et second éléments d'indication, de telle sorte que ce sont d'abord les moyens d'indication de l'un desdits deux éléments d'indication qui sont visibles dans ladite fenêtre de visualisation jusqu'à un nombre prédéterminé d'actionnement, après quoi ce sont les moyens d'indication de l'autre desdits deux éléments d'indication qui deviennent visibles dans la fenêtre de visualisation.

Avantageusement, ledit élément d'interconnexion est déplaçable, notamment en translation, entre lesdits premier et second éléments d'indication.

Avantageusement, lesdits premier et second éléments d'indication sont des disques rotatifs, ledit élément d'interconnexion étant une plaque mince reçue dans des moyens de guidage translatifs.

Selon une première variante de réalisation, lesdits moyens de guidage sont réalisés sur un disque de guidage interposé entre lesdits premier et second éléments d'indication.

Selon une seconde variante de réalisation, lesdits moyens de guidage sont réalisés sur le couvercle.

Avantageusement, ledit élément d'interconnexion comporte au moins une première projection coopérant avec le premier élément d'indication et au moins une seconde projection coopérant avec le second élément d'indication.

Avantageusement, ladite première projection coopère avec une fente, rainure ou rail prévu(e) dans le premier élément d'indication, et ladite seconde projection coopère avec une fente, rainure ou rail de guidage prévu(e) dans le second élément d'indication.

Avantageusement, ladite rainure de guidage du second élément d'indication comporte une première partie s'étendant environ en spirale à partir du centre et une seconde partie s'étendant environ de manière circulaire au niveau de la périphérie dudit second élément d'indication, une rotation dudit second élément d'indication provoquant un déplacement translatif dudit élément d'interconnexion jusqu'à ce que ladite seconde projection coopère avec ladite seconde partie circulaire de la rainure de guidage.

Avantageusement, tout déplacement de l'élément d'interconnexion provoque une rotation du premier élément d'indication.

Avantageusement, ledit premier élément d'indication comporte, dans le sens de rotation dudit premier élément d'indication, des premiers moyens d'indication suivis d'une fenêtre.

Avantageusement, ledit second élément d'indication comporte des seconds moyens d'indication, notamment des chiffres et/ou des symboles.

Avantageusement, lesdits seconds moyens d'indication sont disposés autour de la périphérie dudit second élément d'indication.

Avantageusement, lesdits premiers moyens d'indication du premier élément d'indication sont d'abord visibles dans la fenêtre de visualisation du couvercle jusqu'à ce que ledit premier élément d'indication a tourné suffisamment pour mettre sa fenêtre en regard de la fenêtre de visualisation du couvercle, permettant de visualiser les seconds moyens d'indication du second élément d'indication à travers lesdites fenêtres.

Avantageusement, ledit couvercle et ledit premier élément d'indication sont montés sur une tige axiale centrale du second élément d'indication, ledit élément d'interconnexion comportant une ouverture longitudinale traversée par ladite tige.

Avantageusement, ledit indicateur comporte en outre des moyens d'actionnement adaptés à faire tourner ledit second élément d'indication à chaque actionnement.

La présente invention a également pour objet un dispositif de distribution de produit fluide ou pulvérulent comportant un réservoir et un organe de distribution, tel qu'une pompe ou une valve, assemblé sur ledit réservoir, ledit dispositif comportant un indicateur tel que décrit ci-dessus.

Selon un premier mode de réalisation, ledit indicateur est fixé sur la paroi de fond du réservoir opposée audit organe de distribution.

Selon un second mode de réalisation, ledit indicateur est disposé latéralement par rapport audit réservoir.

D'autres caractéristiques et avantages de la présente invention apparaîtront plus clairement au cours de la description détaillée suivante faite en référence aux dessins joints, donnés à titre d'exemples non limitatifs, et sur lesquels :
- la figure 1 est une vue schématique en perspective éclatée d'un indicateur selon un mode de réalisation particulier de la présente invention ;
- la figure 2 est une vue similaire à celle de la figure 1 montrant plus particulièrement le système d'indication de l'indicateur vu par le haut ;
- la figure 3 est une vue similaire à celle de la figure 2, mais vu en sens inverse ;
- la figure 4 est une vue assemblée du dispositif représenté sur les figures 2 et 3 ;
- les figures 5 à 7 sont des vues schématiques de dessus montrant l'indication faite à l'utilisateur respectivement au début, au milieu, et vers la fin d'utilisation du dispositif ;
- la figure 8 est une vue très schématique en section transversale d'un dispositif de distribution de produit fluide comportant un indicateur de l'invention, selon un premier mode de réalisation ; et
- la figure 9 est une vue similaire à celle de la figure 8, mais montrant un deuxième mode de réalisation.

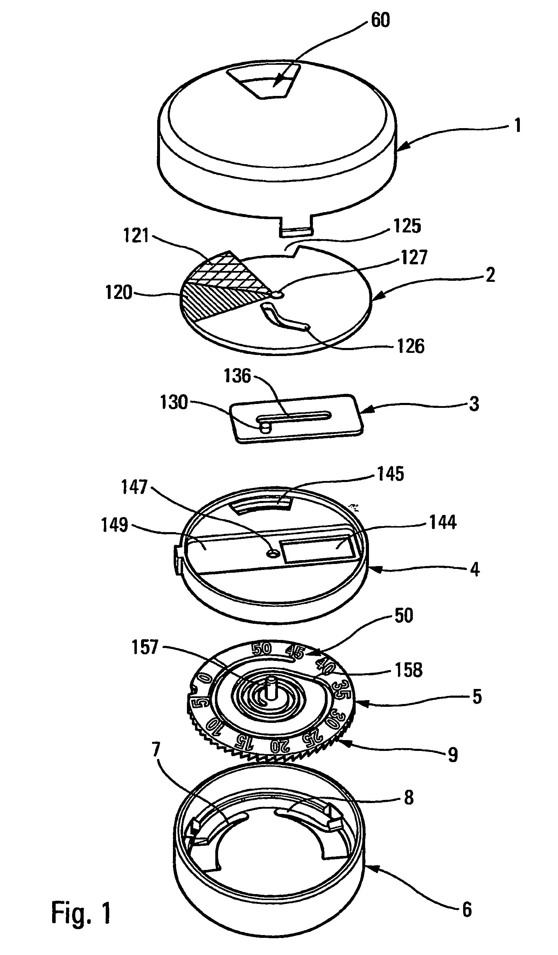

En référence aux figures 1 à 4, il est représenté un mode de réalisation particulier de l'indicateur de la présente invention. Il est entendu que ce mode de réalisation n'est donné qu'à titre d'exemple particulier, et qu'il n'est pas limitatif pour la présente invention. De manière générale, l'indicateur comporte un couvercle 1, pourvu d'une fenêtre de visualisation 60, dans lequel sont logés un certain nombre d'éléments qui seront décrits plus en détail si après. Des moyens d'actionnement sont prévus pour actionner cet indicateur, ces moyens d'actionnement pouvant être quelconques, la présente invention ne concernant pas la nature, la forme ou la fonction de ces moyens d'actionnement. Dans l'exemple représenté, ces moyens d'actionnement comportent un élément d'entraînement 6 pourvu de deux pattes élastiques 7, 8 qui sont adaptées à faire tourner une partie de l'indicateur comme cela sera décrit ci-après. Bien entendu, d'autre moyen d'entraînement ou d'actionnement sont envisageables.

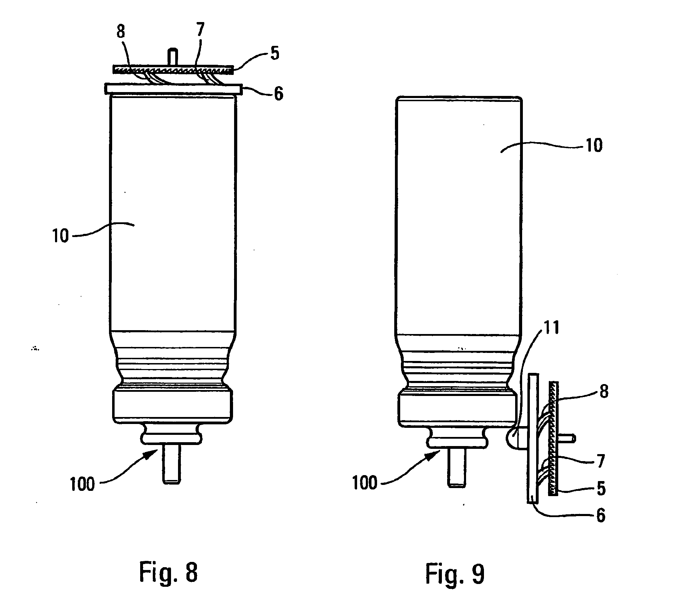

En se référant maintenant rapidement aux figures 8 et 9, il est représenté deux modes de réalisation différents d'un dispositif de distribution de produit fluide ou pulvérulent incorporant un indicateur selon l'invention. Dans l'exemple de la figure 8, le dispositif comporte un réservoir 10 sur lequel est assemblé un organe de distribution 100, l'indicateur étant disposé sur la paroi de fond dudit réservoir 10 opposée audit organe de distribution 100. Sur la figure 9 l'indicateur est disposé latéralement par rapport audit réservoir 10. On constate ainsi qu'avec l'indicateur de la présente invention, il est possible très aisément de disposer cet indicateur dans une position quelconque souhaitée, y compris sur le fond du réservoir 10, de manière simple, et sans nécessiter un encombrement circonférentiel supérieur à celui du réservoir lui-même. Ici aussi, d'autres positionnements de l'indicateur sont envisageables, les exemples représentés sur les figures 8 et 9 ne sont donnés qu'à titre illustratif.

La description ci-après va décrire de manière détaillée un système d'indication de l'indicateur, sans rentrer dans les détails des autres éléments constitutifs du dispositif de distribution de produit fluide ou pulvérulent.

En se référant à nouveau aux figures 1 à 4, l'indicateur comporte un premier élément d'indication 2 et un second élément d'indication 5, le premier élément d'indication comportant des premiers moyens d'indication 120,121 et le second élément d'indication comportant des seconds moyens d'indication 50.

De manière plus détaillée, le premier élément d'indication 2 peut être réalisé sous la forme d'un disque rotatif comportant un trou central 127 et pourvu de deux secteurs 120, 121 identifiables pour l'utilisateur. Ces secteurs 120, 121 peuvent par exemple être de couleurs différentes, mais tous autres moyens d'indication visibles et identifiables pour l'utilisateur sont envisageables. Ces premiers moyens d'indication 120, 121 sont suivis, dans la direction de rotation dudit premier élément d'indication 2, par une fenêtre 125. Par ailleurs, cet élément d'indication 2 comporte également un rail, une rainure ou une fente 126 dont la fonction sera décrite ci-après.

Le second élément d'indication 5 est avantageusement également réalisé sous la forme d'un disque rotatif, qui comporte d'un côté une denture 9 destinée à coopérer avec les moyens d'actionnement de l'indicateur. Ainsi, à chaque actionnement du dispositif de distribution de produit fluide sur lequel l'indicateur est assemblé, les moyens d'entraînement font tourner ce second élément d'indication 5 en coopérant avec cette denture 9. Du côté opposé, le second élément d'indication 5 comporte les seconds moyens d'indication 50, qui dans l'exemple représenté sont formés par des chiffres allant de cinquante à zéro. Avantageusement, ces chiffres sont disposés autour de la périphérie dudit second élément d'indication 5 pour les raisons qui seront expliquées ci-après. Ledit second élément d'indication 5 comporte en outre une tige axiale centrale 157 ainsi qu'un profil, réalisé sous la forme d'une rainure, d'une fente ou d'un rail de guidage 158. Cette rainure de guidage 158 comporte de préférence deux parties distinctes, une première partie qui s'étend en spirale à partir du centre dudit second élément de comptage 5, et qui se connecte à une seconde partie sensiblement circulaire et s'étendant à proximité de la périphérie dudit second élément d'indication 5.

Un élément d'interconnexion 3 est disposé entre lesdits premier et second éléments d'indication 2 et 5. Cet élément d'interconnexion 3 est de préférence réalisé sous la forme d'une plaque mince reçue dans des moyens de guidage translatif 149, de sorte que cet élément d'interconnexion 3 est adapté à réaliser un déplacement en translation dans une direction perpendiculaire à l'axe de rotation desdits premier et second éléments d'indication 2 et 5. Avantageusement, comme représenté sur les figures 1 à 4, les moyens de guidage translatifs 149 peuvent être réalisés sur un disque de guidage 4 qui est interposé entre lesdits premier et second élément d'indication 2 et 5. Dans cette hypothèse, ce disque de guidage 4 comporte en outre une fenêtre de visualisation 145, ainsi qu'un trou central 147 et une ouverture 144 s'étendant environ radialement et adapté à permettre le déplacement dudit élément d'interconnexion 3. En variante, on pourrait réaliser ces moyens de guidage translatifs 149 directement sur le couvercle 1.

Selon l'invention, cet élément d'interconnexion 3 est interconnecté entre lesdits premier et second éléments d'indication 2, 5 de telle sorte que ce sont d'abord les moyens d'indication 120, 121 du premier élément d'indication 2 qui sont visible dans la fenêtre de visualisation 60 jusqu'à un nombre prédéterminé d'actionnement, après quoi ce sont les moyens d'indication 50 du second élément d'indication 5 qui deviennent visibles dans cette même fenêtre de visualisation 60 du couvercle 1. En variante, on pourrait bien entendu inverser les éléments d'indication 2 et 5, auquel cas on pourrait d'abord visualiser les moyens d'indication du second élément d'indication 5 suivis par les moyens d'indication du premier élément d'indication 2.

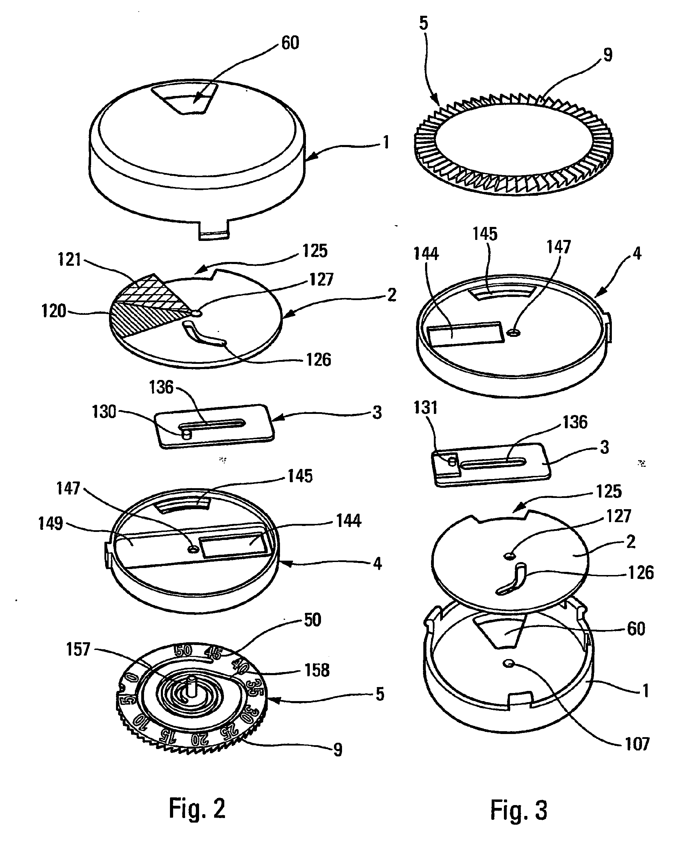

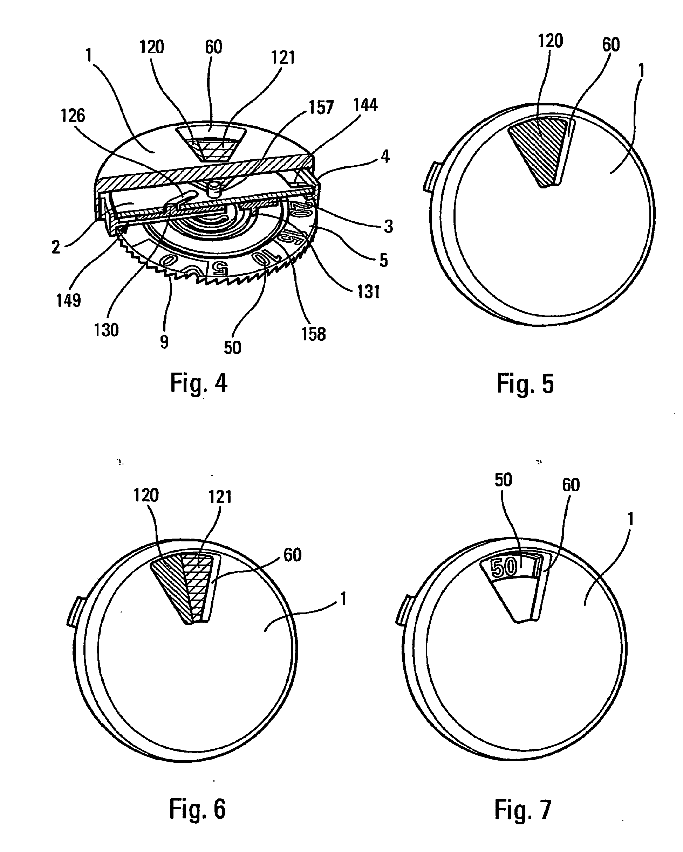

Dans l'exemple représenté, l'élément d'interconnexion 3 comporte une première projection 130 qui est destinée à coopérer avec la fente 126 prévue dans le premier élément d'indication 2. Par ailleurs, cet élément d'interconnexion 3 comporte également une seconde projection 131, visible sur la figure 3, et disposé donc du côté opposé à la première projection 130, cette seconde projection 131 étant destinée à coopérer avec la rainure de guidage 158 du second élément d'indication 5. Dans l'exemple représenté sur les figures, cette seconde projection 131 passe donc à travers l'ouverture radiale 144 du disque de guidage 4. La figure 4 montre l'indicateur des figures 1 à 3 assemblé. On constate que le premier élément d'indication 2 ainsi que le couvercle 1 sont montés sur la tige axiale centrale 157 du second élément d'indication 5, cette tige passant à travers le trou central 127 du premier élément d'indication 2 et se fixant dans un trou borgne 107 prévue dans le fond du couvercle 1. L'élément d'interconnexion 3 comporte une ouverture longitudinale 136 à travers laquelle la tige 157 peut passer, de sorte que ledit élément d'interconnexion peut coulisser en translation autour de cette tige centrale 157. De plus, si un disque de guidage 4 est utilisé, celui-ci est également assemblé autour de ladite tige centrale 157 par l'intermédiaire de son trou central 147.

Lorsque l'indicateur est assemblé, la première projection 130 de l'élément d'interconnexion 3 est disposé dans la fente 126 du premier élément d'indication 2, d'un côté de celle-ci, et la seconde projection 131 dudit élément d'interconnexion 3 est disposée dans ladite rainure de guidage 158 du second élément d'indication 5 à l'extrémité de la première partie de ladite rainure 158 qui s'étend en spirale à partir du centre. Lorsque l'utilisateur actionne l'indicateur, le second élément d'indication 5 tourne autour d'un axe qui est parallèle, notamment confondu avec la tige centrale 157. Cette rotation provoque un déplacement translatif de l'élément d'interconnexion 3 du fait que la seconde projection 131 de cet élément d'interconnexion 3 est logée dans la partie en spirale de la rainure 158 du second élément d'indication 5 et que l'élément d'interconnexion 3 coopère avec les moyens de guidage translatifs 149. Ce déplacement translatif de l'élément d'interconnexion 3 provoque une rotation du premier élément d'indication 2, du faite de la coopération entre la première projection 130 de l'élément d'interconnexion 3 et de la fente 126 du premier élément d'indication 2. Ainsi, en se référent maintenant aux figures 5 à 7, on constate que sur la figure 5 il est représenté l'indication faite à l'utilisateur avant la première utilisation de cet indicateur. La fenêtre de visualisation 60 du couvercle 1 montre le premier secteur 120 prévu sur le premier élément d'indication 2. Au fur et à mesure que l'utilisateur actionne l'indicateur, ce premier élément d'indication 2 va donc tourner par rapport audit couvercle 1 autour de la tige centrale 157 du second élément d'indication5. Ceci est représenté sur la figure 6 qui montre l'indication faite à l'utilisateur après environ distribution de la moitié des doses contenues dans le distributeur. Lorsque la seconde projection 131 de l'élément d'interconnexion 3 atteint la partie circulaire de la rainure de guidage 158, toutes rotations supplémentaires du second élément d'indication 5 ne provoquera plus aucune translation de l'élément d'interconnexion 3, celui-ci ayant alors atteint sa position d'extrémité. A partir de ce moment là cet élément d'interconnexion ne bougera plus lors des actionnements suivants. Simultanément, la première projection 130 aura déplacé le premier élément d'indication 2 sur la totalité des deux secteurs 120, 121 et aura emmené la fenêtre 125 en regard de la fenêtre de visualisation 60 du couvercle 1. A partir de ce moment là, les moyens d'indication 50, en l'occurrence les chiffes seront donc visibles pour l'utilisateur à travers les deux fenêtres 60 et 125 comme cela à visible sur la figure 7. Avantageusement, le premier élément d'indication 2 peut être d'une couleur vive, par exemple rouge, et la fenêtre 125 de ce premier élément d'indication peut être de dimension radiale inférieure à celle de la fenêtre de visualisation 60 du couvercle 1. Dans ce cas, au moment ou les chiffres 50 du second élément d'indication 5 apparaissent dans la fenêtre de visualisation 60, ils sont combinés avec cette surface rouge du premier élément d'indication 2, ce qui indique à l'utilisateur qu'il arrive dans une position cruciale, dans laquelle il ne reste que peu de doses disponibles. De même, en arrivant à proximité du chiffre zéro, indiquant qu'il ne reste plus de produit à distribuer, la surface du second élément d'indication 5 sur laquelle les chiffres sont marqués peut aussi être modifiée, par exemple colorée dans une couleur vive pour encore d'avantage attirer l'attention de l'utilisateur. L'indication est donc particulièrement fiable et visible pour l'utilisateur. Le passage entre la visualisation des premiers moyens d'indication 120, 121 du premier élément d'indication 2 et les seconds moyens d'indication 50 du second élément d'indication 5 se fait très rapidement en raison de l'angle ménagé dans la fente 126 du second élément d'indication 2. En l'occurrence, en trois ou quatre actionnements, la totalité de la fenêtre 125 est mise en face de la fenêtre de visualisation 60 du couvercle 1, alors que la rotation angulaire du premier élément d'indication 2 au niveau des secteurs 120,121 se fait très lentement (en l'occurrence sur cent cinquante doses si on considère que le dispositif en contient deux cents à l'origine). De manière plus générale, la forme de la fente 126 prédétermine les caractéristiques de la rotation du premier élément d'indication 2 par rapport au second élément d'indication 5. Cette forme peut être adaptée à souhait en fonction des besoins. Il est donc très facile d'adapter ou de modifier les caractéristiques d'indication de l'indicateur de l'invention.

Un avantage de la présente invention est que la présence de l'élément d'interconnexion 3 ne modifie pas les dimensions externes de l'indicateur, celui-ci pouvant avoir un diamètre environ égal au diamètre du réservoir, de sorte qu'il peut aisément être assemblé sur sa paroi de fond. L'élément d'interconnexion 3 coulisse en effet entre les deux éléments d'indication 2, 5, sans jamais dépasser latéralement hors de la circonférence de ces éléments d'indication.

Bien entendu, les différents éléments décrits ci-dessus peuvent être modifiés par l'homme du métier sans sortir du cadre de la présente invention. En particulier, les formes des rails, rainures ou fentes de guidage 126, 158 peuvent être différentes, de même que des couleurs, des signes, des symboles ou tous autres moyens d'indication pourraient être utilisés à la place de ceux représentés. De plus, le premier élément d'indication 2 pourrait comprendre plus d'une fenêtre s'il est souhaitable de permettre une indication de plusieurs moyens d'indication prévus sur le second élément d'indication 5. Enfin, comme précisé ci-dessus, la présence du disque de guidage 4 n'est pas nécessaire, et l'élément d'interconnexion 3 pourrait comporter des projections qui seraient susceptibles de traverser le premier élément d'indication 2 et de coopérer avec des moyens de guidage appropriés réalisés dans le couvercle 1.

D'autres variantes et modifications sont également envisageables sans sortir du cadre de la présente invention tel que défini par les revendications annexées.

## Revendications

1. Indicateur pour dispositif de distribution de produit fluide ou pulvérulent, comportant un système d'indication, ledit système d'indication comportant.
- un couvercle (1) pourvu d'une fenêtre de visualisation (60),
- un premier éléments d'indication (2) rotatif autour d'un axe de rotation, ledit premier élément d'indication (2) comportant des premiers moyens d'indication (120, 121, 125),
- un second élément d'indication (5) rotatif autour dudit axe de rotation, ledit second élément d'indication (5) comportant des seconde moyens d'indication (50),
- un éléments d'interconnexion (3) interconnecté entre lesdits premier et second éléments d'indication (2, 5), **caractérisé en ce que** ledit éléments d'interconnexion (3) étant déplaçable perpendiculairement à l'axe rotation desdits premier et second éléments d'indication, de telle sorte que ce sont d'abord iniquement les moyens d'indication (120, 121 ; 50) de l'un desdits deux éléments d'indication (2, 5) qui sont visibles dans ladite fenêtre de visualisation (60) jusqu'à un nombre prédeterminé d'actionnement, après quoi ce sont les moyens d'indication (50; 120, 121) de l'autre desdits deux éléments d'indication (2, 5) qui deviennent visibles dans la fenêtre de visualisation.

2. Indicateur selon la revendication 1, dans lequel ledit élément d'interconnexion (3) est déplaçable en translation entre lesdits premier et second éléments d'indication (2, 5).

3. Indicateur selon la revendication 1 ou 2, dans lequel lesdites premier et second éléments d'indication (2, 5) sont des disques rotatifs, ledit élément d'interconnexion (3) étant une plaque mince reçue dans des moyens de guidage translatifs (149).

4. Indicateur selon la revendication 3, dans lequel lesdits moyens de guidage (149) sont réalises sur un disque de guidage (4) interposé entre lesdits premier et second élements d'indication (2.5).

5. Indicateur selon la revendication 3, dans lequel lesdits moyens de guidage sont réalisés sur le couvercle (1).

6. Indicateur selon l'une quelconque des revendications précédentes, dans lequel ledit élément d'interconnexion (3) comporte au moins une première projection (130) coopérant avec le premier élément d'indication (2) et au moins une seconde projection (131) coopérant avec le second élément d'indication (5),

7. Indicateur selon la revendication 6, dans lequel ladite première projection (130) coopère avec une fente, rainure ou rail (126) prévu(e) dans le premier élément d'indication (2), et ladite seconde projection (131) coopère avec une fente, rainure ou rail de guidage (158) prévu(e) dans le second élément d'indication (5).

8. Indicateur selon la revendication 7, dans lequel ladite rainure de guidage (158) du second élément d'indication (5) comporte une première partie s'étendant environ en spirale à partir du centre et une seconde partie s'étendant environ de manière circulaire au niveau de la périphérie dudit second élément d'indication (5), une rotation dudit second élément d'indication (5) provoquant un déplacement translatif dudit élément d'interconnexion (3) jusqu'à ce que ladite seconde projection (131) coopère avec ladite seconde partie circulaire de la rainure de guidage (158).

9. Indicateur selon la revendication 8, dans lequel tout déplacement de l'élément d'interconnexion (3) provoque une rotation du premier élément d'indication (2).

10. Indicateur selon l'une quelconque des revendications précédentes, dans lequel ledit premier élément d'indication (2) comporte, dans le sens de rotation dudit premier élément d'indication (2), des premiers moyens d'indication (120, 121) suivis d'une fenêtre (125).

11. Indicateur selon l'une quelconque des revendications précédentes, dans lequel ledit second élément d'indication (5) comporte des seconds moyens d'indication (50), notamment des chiffres et/ou des symboles.

12. Indicateur selon la revendication 11, dans lequel lesdits seconds moyens d'indication (50) sont disposés autour de la périphérie dudit second élément d'indication (5).

13. Indicateur selon la revendication 10 et l'une des revendications 11 ou 12, dans lequel lesdits premiers moyens d'indication (120, 121) du premier élément d'indication (2) sont d'abord visibles dans la fenêtre de visualisation (60) du couvercle (1) jusqu'à ce que ledit premier élément d'indication (2) a tourné suffisamment pour mettre sa fenêtre (125) en regard de la fenêtre de visualisation (60) du couvercle (1), permettant de visualiser les seconds moyens d'indication (50) du second élément d'indication (5) à travers lesdites fenêtres (125, 60).

14. Indicateur selon l'une quelconque des revendications précédentes, dans lequel ledit couvercle (1) et ledit premier élément d'indication (2) sont montés sur une tige axiale centrale (157) du second élément d'indication (5), ledit élément d'interconnexion (3) comportant une ouverture longitudinale (136) traversée par ladite tige (157).

15. Indicateur selon l'une quelconque des revendications précédentes, dans lequel ledit indicateur comporte en outre des moyens d'actionnement adaptés à faire tourner ledit second élément d'indication (5) à chaque actionnement.

16. Dispositif de distribution de produit fluide ou pulvérulent comportant un réservoir (10) et un organe de distribution (100), tel qu'une pompe ou une valve, assemblés sur ledit réservoir (10), **caractérisé en ce que** ledit dispositif comporte un indicateur selon l'une quelconque des revendications précédentes.

17. Dispositif selon la revendication 16, dans lequel ledit indicateur est fixé sur la paroi de fond du réservoir (10) opposée audit organe de distribution (100).

18. Dispositif selon la revendication 16, dans lequel ledit indicateur est disposé latéralement par rapport audit réservoir (10).

## Claims

1. An indicator for a powder or fluid dispenser device, the indicator including an indicator system said indicator system comprising:
• a cover (1) provided with a viewing window (60);
• a first indicator element (2) that turns about a rotation axis, said first indicator element (2) including first indicator means (120, 121, 125);
• a second indicator element (5) that turns about said rotation axis, said second indicator element (5) including second indicator means (50); and
• an interconnection element (3) that interconnects said first and second indicator elements (2, 5),
**characterized in that** said interconnection element (3) being displacable perpendicularly to the rotation axis of said first and second indicator elements, such that the indicator means (120, 121; 50) of only one of said two indicator elements (2, 5) are visible initially in said viewing window (60) up to a predetermined number of actuations, after which the indicator means (50; 120, 121) of the other of said two indicator elements (2, 5) become visible in the viewing window.

2. An indicator according to claim 1, in which said interconnection element (3) is displaceable in translation between said first and second indicator elements (2, 5).

3. An indicator according to claim 1 or claim 2, in which said first and second indicator elements (2, 5) are rotary disks, said interconnection element (3) being a thin plate that is received in guide means (149) for providing guidance in translation.

4. An indicator according to claim 3, in which said guide means (149) are formed by a guide disk (4) that is interposed between said first and second indicator elements (2, 5).

5. An indicator according to claim 3, in which said guide means are formed by the cover (1).

6. An indicator according to any preceding claim, in which said interconnection element (3) includes at least one first projection (130) that co-operates with the first indicator element (2), and at least one second projection (131) that co-operates with the second indicator element (5).

7. An indicator according to claim 6, in which said first projection (130) co-operates with a slot, a groove, or a rail (126) that is provided in the first indicator element (2), and said second projection (131) co-operates with a guide slot, a guide groove, or a guide rail (158) that is provided in the second indicator element (5).

8. An indicator according to claim 7, in which said guide groove (158) of the second indicator element (5) comprises a first portion that extends in approximately spiral manner from the center, and a second portion that extends in approximately circular manner at the periphery of said second indicator element (5), turning said indicator element (5) causing said interconnection element (3) to be displaced in translation until said second projection (131) co-operates with said circular second portion of the guide groove (158).

9. An indicator according to claim 8, in which Any displacement of the interconnection element (3) causes the first indicator element (2) to turn.

10. An indicator according to any preceding claim, in which, in the turning direction of said first indicator element (2), said first indicator element (2) includes first indicator means (120, 121), followed by a window (125).

11. An indicator according to any preceding claim, in which said second indicator element (5) includes second indicator means (50), in particular numbers and/or symbols.

12. An indicator according to claim 11, in which said second indicator means (50) are disposed around the periphery of said second indicator element (5).

13. An indicator according to claim 10, and claim 11 or claim 12, in which said first indicator means (120, 121) of the first indicator element (2) are visible initially in the viewing window (60) of the cover (1) until said first indicator element (2) has turned sufficiently for its window (125) to be in register with the viewing window (60) of the cover (1), thereby making it possible to view the second indicator means (50) of the second indicator element (5) through said windows (125, 60).

14. An indicator according to any preceding claim, in which said cover (1) and said first indicator element (2) are mounted on a central axial pin (157) of the second indicator element (5), said interconnection element (3) including a longitudinal opening (136) through which said pin (157) passes.

15. An indicator according to any preceding claim, in which said indicator further includes actuator means that are adapted to cause said second indicator element (5) to turn at each actuation.

16. A powder or fluid dispenser device comprising a reservoir (10), and a dispenser member (100), such as a pump or a valve, assembled on said reservoir (10), the device being **characterized in that** it includes an indicator according to any preceding claim.

17. A device according to claim 16, in which said indicator is fastened on the bottom wall of the reservoir (10) remote from said dispenser member (100).

18. A device according to claim 16, in which said indicator is disposed on the side of said reservoir (10).

## Patentansprüche

1. Anzeigevorrichtung für eine Ausgabevorrichtung für ein flüssiges oder pulveriges Produkt, aufweisend ein Anzeigesystem, wobei das Anzeigesystem aufweist
- einen Deckel (1), der mit einem Sichtfenster (60) versehen ist,
- ein erstes Anzeigeelement (2), das um eine Drehachse drehbar ist, wobei das erste Anzeigeelement (2) erste Anzeigemittel (120, 121, 125) aufweist,
- ein zweites Anzeigeelement (5), das um die Drehachse drehbar ist, wobei das zweite Anzeigeelement (5) zweite Anzeigemittel (50) aufweist,
- ein Verbindungselement (3), das zwischen dem ersten und dem zweiten Anzeigeelement (2, 5) zwischengeschaltet ist, **dadurch gekennzeichnet, dass** das Verbindungselement (3) senkrecht zur Drehachse des ersten und zweiten Anzeigeelements umstellbar ist, und zwar derart, dass bis zu einem vorbestimmten Ausmaß der Betätigung zunächst nur die Anzeigemittel (120, 121; 50) eines der beiden Anzeigeelemente (2, 5) in dem Sichtfenster (60) sichtbar sind, woraufhin die Anzeigemittel (50; 120, 121) des anderen der beiden Anzeigeelemente (2, 5) in dem Sichtfenster sichtbar werden.

2. Anzeigevorrichtung nach Anspruch 1, wobei das Verbindungselement (3) verschiebbar zwischen dem ersten und dem zweiten Anzeigeelement (2, 5) umstellbar ist.

3. Anzeigevorrichtung nach Anspruch 1 oder 2, wobei das erste und das zweite Anzeigeelement (2, 5) Drehscheiben sind, wobei das Verbindungselement (3) eine dünne Platte ist, die in verschiebbaren Führungsmitteln (149) aufgenommen ist.

4. Anzeigevorrichtung nach Anspruch 3, wobei die Führungsmittel (149) auf einer Führungsscheibe (4) realisiert sind, die zwischen dem ersten und dem zweiten Anzeigeelement (2, 5) zwischengeschaltet ist.

5. Anzeigevorrichtung nach Anspruch 3, wobei die Führungsmittel auf dem Deckel (1) realisiert sind.

6. Anzeigevorrichtung nach einem der vorhergehenden Ansprüche, wobei das Verbindungselement (3) mindestens einen ersten Vorsprung (130), der mit dem ersten Anzeigeelement (2) zusammenwirkt, und mindestens einen zweiten Vorsprung (131) aufweist, der mit dem zweiten Anzeigeelement (5) zusammenwirkt .

7. Anzeigevorrichtung nach Anspruch 6, wobei der erste Vorsprung (130) mit einem Schlitz, einer Nut oder einer Schiene (126) zusammenwirkt, der/die in dem ersten Anzeigeelement (2) vorgesehen ist, und der zweite Vorsprung (131) mit einem Führungsschlitz, einer Führungsnut oder einer Führungsschiene (158) zusammenwirkt, der/die in dem zweiten Anzeigeelement (5) vorgesehen ist.

8. Anzeigevorrichtung nach Anspruch 7, wobei die Führungsnut (158) des zweiten Anzeigeelements (5) einen ersten Teil, der sich ungefähr spiralartig von der Mitte erstreckt, und einen zweiten Teil aufweist, der sich ungefähr kreisförmig an dem Umfang des zweiten Anzeigeelements (5) erstreckt, wobei eine Drehung des zweiten Anzeigeelements (5) eine Schiebeumstellung des Verbindungselements (3) hervorruft, bis der zweite Vorsprung (131) mit dem zweiten kreisförmigen Teil der Führungsnut (158) zusammenwirkt.

9. Anzeigevorrichtung nach Anspruch 8, wobei jede Umstellung des Verbindungselements (3) eine Drehung des ersten Anzeigeelements (2) hervorruft.

10. Anzeigevorrichtung nach einem der vorhergehenden Ansprüche, wobei das erste Anzeigeelement (2) in Drehrichtung des ersten Anzeigeelements (2) erste Anzeigemittel (120, 121) gefolgt von einem Fenster (125) aufweist.

11. Anzeigevorrichtung nach einem der vorhergehenden Ansprüche, wobei das zweite Anzeigeelement (5) zweite Anzeigemittel (50), insbesondere Ziffern und/oder Symbole, aufweist.

12. Anzeigevorrichtung nach Anspruch 11, wobei die zweiten Anzeigemittel (50) um den Umfang des zweiten Anzeigeelements (5) angeordnet sind.

13. Anzeigevorrichtung nach Anspruch 10 und einem der Ansprüche 11 oder 12, wobei die ersten Anzeigemittel (120, 121) des ersten Anzeigeelements (2) zunächst in dem Sichtfenster (60) des Deckels (1) sichtbar sind, bis sich das erste Anzeigeelement (2) soweit gedreht hat, dass sein Fenster (125) mit dem Sichtfenster (60) des Deckels (1) überlappt, wodurch die zweiten Anzeigemittel (50) des zweiten Anzeigeelements (5) durch die Fenster (125, 60) gesehen werden können.

14. Anzeigevorrichtung nach einem der vorhergehenden Ansprüche, wobei der Deckel (1) und das erste Anzeigeelement (2) auf einem axialen Mittelschaft (157) des zweiten Anzeigeelements (5) angebracht sind, wobei das Verbindungselement (3) eine Längsöffnung (136) aufweist, die von dem Schaft (157) gequert wird.

15. Anzeigevorrichtung nach einem der vorhergehenden Ansprüche, wobei die Anzeigevorrichtung des weiteren Betätigungsmittel aufweist, die dazu geeignet sind, das zweite Anzeigeelement (5) bei jeder Betätigung zu drehen.

16. Ausgabevorrichtung für ein flüssiges oder pulveriges Produkt, aufweisend einen Behälter (10) und eine Ausgabeeinrichtung (100), wie eine Pumpe oder ein Ventil, die auf dem Behälter (10) montiert sind, **dadurch gekennzeichnet, dass** die Vorrichtung eine Anzeigevorrichtung nach einem der vorhergehenden Ansprüche aufweist.

17. Vorrichtung nach Anspruch 16, wobei die Anzeigevorrichtung auf der Bodenwand des Behälters (10) entgegengesetzt zur Ausgabeeinrichtung (100) befestigt ist.

18. Vorrichtung nach Anspruch 16, wobei die Anzeigevorrichtung seitlich in Bezug auf den Behälter (10) angeordnet ist.
